# FASCICULE DE BREVET EUROPEEN

(11) **EP 3 546 888 B1**
(45) Date de publication et mention de la délivrance du brevet: **05.03.2025**
(21) Numéro de dépôt: 19164641.3
(22) Date de dépôt: 22.03.2019
(51) Int. Cl.: G01C 21/00, B64D 43/00, B64D 45/00, B64D 47/00, G01C 23/00, G01D 3/10, G09G 5/00

(54) **SYSTEME COMPRENANT UN DISPOSITIF AVIONIQUE D'INTERFACE POUR CALCULATEUR AMOVIBLE DANS UN AERONEF**
SYSTEM MIT EINER AVIONIKSCHNITTSTELLENEINRICHTUNG FÜR EIN HERAUSNEHMBARER RECHNER IN EINEM LUFTFAHRZEUG
SYSTEM COMPRISING AN AVIONICS INTERFACE DEVICE FOR A REMOVABLE COMPUTER IN AN AIRCRAFT

(30) Priorité: 29.03.2018 FR 1800262
(43) Date de publication de la demande: 02.10.2019
(73) Titulaire: Thales, 92400 Courbevoie (FR)
(72) Inventeur: HUYNH, Rémi, 31120 PORTET SUR GARONNE (FR)
(74) Mandataire: Atout PI Laplace

(56) Documents cités:
- EP-A1- 1 469 652
- EP-A1- 3 002 928
- EP-A1- 3 208 707
- FR-A1- 2 907 758
- FR-A1- 3 005 162
- FR-A1- 3 005 162
- US-A1- 2014 222 254

## Description

### Domaine de l'invention

L'invention concerne le domaine technique de l'avionique et des opérations aériennes en général. En particulier, des exemples de procédés et de systèmes sont décrits, pour la gestion, l'acquisition, la diffusion et la synchronisation de données relatives à un aéronef.

### Etat de la Technique

Les données manipulées dans les systèmes avioniques sont généralement de plusieurs types. Il peut s'agir de données de vol (des enregistrements de paramètres de vol de l'aéronef ou des données résultant du calcul de systèmes permettant le pilotage de l'aéronef comme les centrales inertielles ou la gestion de vol). Les données peuvent aussi comprendre des données de maintenance (par exemple des alertes ou des défaillances des systèmes, des logiciels avioniques télédistribués vers l'avion). Enfin les données peuvent comprendre des données opérationnelles de vol (dossier de vol, statut opérationnel, quantité de carburant etc.)

Les solutions existantes dans l'état de la technique reposent sur des équipements embarqués et certifiés par le régulateur aéronautique. Ces dispositifs impliquent des développements complexes (assurance qualité) ainsi que des déploiements longs et coûteux. Ces approches connues sont lentes et onéreuses à améliorer ou mettre à jour.

On connait par exemple à cet effet :
- la demande de brevet EP 1 469 652 A1, qui décrit un système modulaire permettant de communiquer des données avioniques à des équipements COTS embarqués (en anglais Commercial Off-The-Shelf, ou produit vendu sur étagère) ;
- la demande de brevet US 2014/0222254 A1, dans laquelle un équipement dit AIM (en anglais Aircraft Interface Module, ou module d'interface d'avion) est configuré pour transmettre des données avioniques à des iPad utilisés en tant que sacs de vols électroniques,
- la demande de brevet FR 2 907 758, qui décrit un dispositif permettant d'intégrer un ordinateur portable dans un cockpit d'avion de manière à ce qu'il soit utilisable pendant les phases de vol critiques ;
- la demande de brevet FR 3 005 162 A1, qui décrit un procédé de communication entre une tablette destinée à assister un pilote d'un aéronef et un serveur au sol ainsi que la tablette associée au procédé.

### Résumé de l'invention

La présente invention concerne un système pour la gestion du vol d'un aéronef tel que décrit à la revendication 1. Des aspects de procédé et de logiciel sont décrits. Le système selon l'invention peut communiquer avec des dispositifs de type avionique comprenant des systèmes de concentration de données de vol (FDAU), de centrale inertielle (IRS), de calculateurs de maintenance (CMS) ou de gestion de vol (FMS).

Avantageusement, l'invention combine :
- *isolation électrique* (pour éviter par exemple toute surtension injectée depuis le dispositif amovible vers les systèmes avioniques), et/ou
- *communication unidirectionnelle* des systèmes avioniques vers le dispositif amovible (pour empêcher toute injection de données accidentelles ou malveillantes dans les systèmes certifiés) et/ou
- *coupure automatique des communications cellulaires* (par exemple 3G, 4G ou 5G, etc) afin de réduire ou d'empêcher les perturbations électromagnétiques

D'autres avantages apparaitront dans la description qui suit.

### Description des figures

D'autres caractéristiques et avantages de l'invention apparaîtront à l'aide de la description qui suit et des figures des dessins annexés dans lesquels:
La figure 1 illustre l'environnement général de l'invention ;
La figure 2 illustre un exemple de mode de réalisation selon l'invention.

### Description détaillée de l'invention

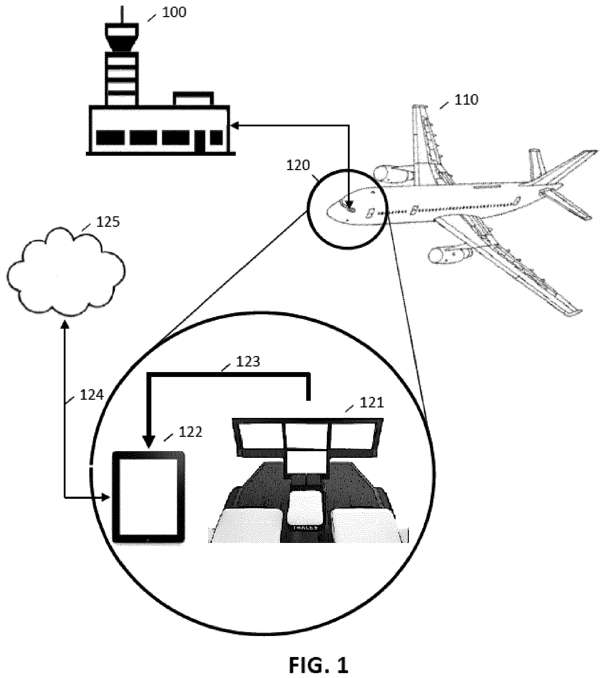

La figure 1 illustre l'environnement technique global de l'invention.

La figure montre des exemples de systèmes (ou « équipements » ou « instruments » ou « matériels » ou « appareils » ou « moyens ») de type « non-avionique » ou « (monde) ouvert » et des équipements de type « avionique » (certifiés par le régulateur).

Un aéronef est un moyen de transport capable d'évoluer au sein de l'atmosphère terrestre. Par exemple, un aéronef peut être un avion ou un hélicoptère (ou bien encore un drone). L'aéronef comprend une cabine de pilotage et des soutes avioniques 120. Au sein de ces dernières se trouvent des équipements avioniques de pilotage 121 (certifiés par le régulateur aéronautique au sein d'un certificat de type dit « TC »), des équipements avioniques optionnels (certifié par le régulateur aéronautique au sein d'un certificat de type supplémentaire dit « STC ») et des équipements optionnels non-avioniques dont l'usage est approuvé par le régulateur aéronautique au sein d'une approbation opérationnelle dite « Ops Approval »).

Un « système avionique » (ou « système de type avionique ») est un système présentant des caractéristiques *techniques* spécifiques en comparaison d'un système « non-avionique » (ou « système de type non-avionique » ou « monde ouvert »), ces caractéristiques techniques étant certifiées *administrativement* par une autorité de confiance (en l'occurrence le régulateur aéronautique).

Concernant les caractéristiques techniques distinctives d'un système avionique, un système - de manière générale, i.e. avionique ou non-avionique - peut présenter ou être associé avec un taux de défaillance prédéfini (parmi une plage de taux de défaillance prédéfinie), un taux de défaillance comprenant ou déterminant un taux d'erreur d'exécution prédéfini.

Dans un mode de réalisation, le taux de défaillance d'un système de type avionique est inférieur au taux de défaillance d'un système de type non-avionique. Dans un mode de réalisation, le taux de défaillance d'un système avionique est significativement ou substantiellement inférieur à celui d'un système non-avionique.

Un système avionique désigne un système fiabilisé (ou à fiabilité garantie). C'est un système dont la défaillance a des conséquences excédant des limites acceptées ou acceptables, donc redoutées. Une défaillance peut se caractériser par la perte de la fonction considérée, ou par la production de données erronées, avec ou sans détection d'une erreur. Selon le niveau de criticité des conséquences redoutées, la probabilité d'occurrence doit être maintenue inférieure à un seuil d'acceptabilité. Ainsi, plus la conséquence est critique, plus la probabilité d'occurrence acceptable est faible. Par exemple, en aéronautique, un événement catastrophique (décès multiples) devra avoir une probabilité d'occurrence inférieure à 10^-9 par heure de vol, alors qu'un incident majeur (réduction des marges de sécurité et des capacités opérationnelles, inconfort ou blessures légères) devra avoir une probabilité d'occurrence inférieure à 10^-5 par heure de vol. Pour assurer ces objectifs, l'architecture du système avionique (fiabilisé) ainsi que la conception de chaque composant garantissent cette probabilité d'occurrence par des garanties de taux de panne de chaque équipement (pannes physiques) et des niveaux de vérification (couverture fonctionnelle et structurelle de test) des logiciels.

Ces exigences imposent un effort important de conception et de vérification, et imposent une limitation dans la complexité des traitements mis en œuvre.

A l'inverse, la défaillance d'un système non-fiabilisé, ou à la fiabilité non garantie (système non-avionique) a des conséquences jugées tolérables, non critiques, ou même sans impact opérationnel significatif. Les exigences sur l'architecture, les composants physiques ou les traitements logiciels sont donc moindres, et autorisent des traitements plus complexes, et un effort de développement et de vérification réduits par rapport à un système fiabilisé.

De manière générale, un système avionique est associé avec un taux de panne physique inférieur et une vérification logique supérieure à ceux d'un système de type non avionique.

Certains termes et environnements techniques sont définis ci-après.

L'acronyme ou sigle EFB correspond à la terminologie anglaise "Electronic Flight Bag" et désigne des librairies électroniques embarquées. Généralement traduit par "sac de vol électronique" ou "sacoche/cartable de vol électronique" ou "tablette de vol électronique", un EFB est un appareil électronique portable et utilisé par le personnel navigant.

L'acronyme IHM correspond à Interface Homme-Machine (HMI en anglais, *Human Machine Interface*)*.* La saisie des informations, et l'affichage des informations saisies ou calculées par les moyens d'affichage, constituent une telle interface homme-machine. De manière générale, les moyens IHM permettent la saisie et la consultation des informations de plan de vol, des données de pilotage, etc.

La figure 1 illustre l'environnement technique global de l'invention. Des moyens au sol (centres de contrôle et bureaux d'étude) 100 sont en communication avec un aéronef 110. Un aéronef est un moyen de transport capable d'évoluer au sein de l'atmosphère terrestre. Par exemple, un aéronef peut être un avion ou un hélicoptère (ou bien encore un drone). L'aéronef comprend une cabine de pilotage ou un cockpit 120. Au sein du cockpit se trouvent des équipements de pilotage 121 (dits équipements avioniques), comprenant par exemple un ou plusieurs calculateurs de bord (moyens de calcul, de mémorisation et de stockage de données), dont notamment un ou plusieurs systèmes avioniques de pilotage, mais pas seulement, des moyens d'affichage ou de visualisation et de saisie de données, des moyens de communication, ainsi que (éventuellement) des moyens de retours haptiques. Un dispositif selon l'invention peut se trouver à bord, de manière « amovible » ou « portative » (« attachée à l'avion »). Par contraste, une tablette EFB peut être soit « *pilot attached* » soit « *A*/*C attached* ». Le dispositif selon l'invention peut interagir (communication unilatérale 123) avec les équipements avioniques (de catégorie « TC ») 121. La communication unidirectionnelle reflète que les équipements avioniques sont préservés ou coupés ou séparés de toute interférence avec les systèmes de type non-avionique 122 (par différents moyens ou méthodes décrits ci-après). Le dispositif selon l'invention peut également être en communication 124 avec des ressources informatiques externes, accessible par le réseau (par exemple informatique en nuage ou "Cloud computing" 125. En particulier, les calculs peuvent s'effectuer localement sur le dispositif 122 ou de manière partielle ou totale dans les moyens de calculs accessibles par le réseau. Les équipements de bord 121 sont généralement certifiés (catégories TC ou STC) et régulés tandis que le dispositif 122 et les moyens informatiques connectés 125 ne le sont généralement pas (ou dans une moindre mesure, par exemple par « approbation opérationnelle »). Cette architecture permet d'injecter de la flexibilité du côté du dispositif 122 en s'assurant d'une sécurité contrôlée du côté de l'avionique embarquée 121.

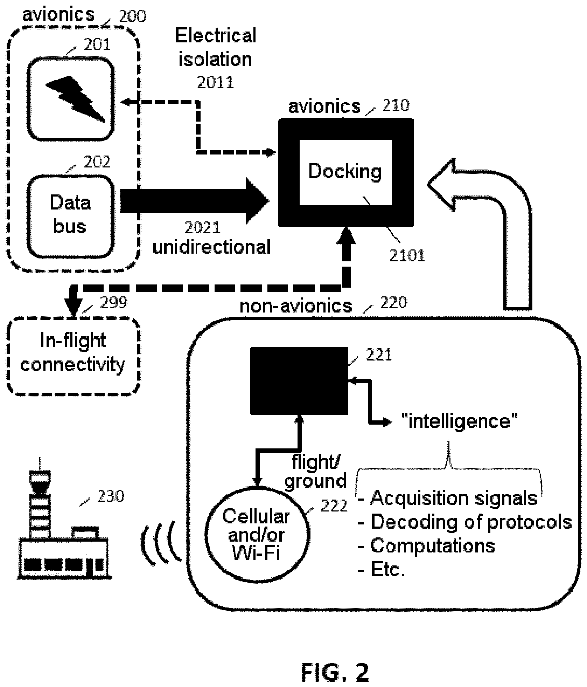

La figure 2 illustre un exemple de mode de réalisation selon l'invention.

Il est décrit un système pour la gestion du vol d'un aéronef comprenant : des dispositifs de type avionique comprenant des systèmes de concentration de données de vol (FDAU), de centrale inertielle (IRS), de calculateurs de maintenance (CMS) ou de gestion de vol (FMS); - un dispositif de type avionique 210 installé dans l'aéronef (de catégorie STC), ledit dispositif installé étant « connectable » (ou « pouvant être connecté » ou étant « apte à être connecté » ou étant « configuré pour pouvoir se connecter ») à une source d'énergie électrique 201 de type avionique; - étant « connectable » ou pouvant être connecté (étant « apte à être connecté » ou étant « configuré pour pouvoir se connecter ») aux bus de données avionique 202 ; - comprenant un support d'accueil 2101 ; - un dispositif amovible 220 de type non avionique pouvant être fixé sur le support d'accueil 2101, ledit dispositif amovible 220 comprenant des ressources de calcul et de stockage 221 pour le traitement de données avionique.

Le dispositif 210 comprend une station d'accueil incluant une isolation électrique et des capacités de conversion de tensions électriques mais ne dispose pas de capacités de calcul dédiées.

Cette première partie est la partie certifiée ou régulée.

Dans un mode de réalisation, la station d'accueil peut comprendre un diviseur de puissance de manière à procurer deux lignes de puissance au dispositif amovible. Une première ligne de puissance peut être apportée continûment lorsque le dispositif amovible est inséré dans la station d'accueil. La seconde ligne de puissance peut être connectée ou déconnectée lorsque l'aéronef est en vol (de manière à suspendre ou couper la communication cellulaire avec le dispositif amovible pour éviter toute interférence électromagnétique avec les calculateurs avioniques certifiés embarqués). En outre, la station d'accueil peut comprendre une interface de données entre l'avionique et le dispositif amovible.

Le bloc 299 « connectivité en vol » (catégorie STC) illustre la communication bidirectionnelle avec le dispositif 210. Ce bloc 299 correspond notamment aux modems de communications en vol (SATCOM pour liaison satellitaire ou ATG pour liaison basé sur la technologie Air-To-Ground).

Le dispositif amovible 220 peut décoder les enregistrements des enregistreurs de vol et des données avionique pour diffuser des paramètres aux appareils électroniques utilisés par les pilotes de type sacs de vol électronique (EFB). Dans un mode de réalisation avantageux, le dispositif amovible peut également être configuré pour diffuser des paramètres à des membres d'équipes de maintenance et/ou aux opérations au sol (e.g. bagages, backoffice, etc).

Le dispositif 220 est « amovible ». Il est « détachable », en particulier sans outil(s) : il peut être attaché ou détaché manuellement (i.e. avec une ou deux mains) à l'avion ou à une partie du cockpit.

Dans un mode de réalisation facultatif, le dispositif amovible peut être verrouillé et déverrouillé (association physique renforcée). Dans un mode de réalisation, le verrouillage et/ou déverrouillage sont libres, i.e. peuvent être effectués manuellement, sans autorisation. Dans un mode de réalisation, le dispositif amovible et la station d'accueil sont couplés à un système antivol (protection par clé, par code, par PIN, par empreinte digitale, par scan d'iris, ou par tout autre moyen biométrique) permettant de se prémunir contre le vol du système amovible (tout en sécurisant l'attachement à l'avion).

Le dispositif comprend notamment des circuits d'acquisition de signal et de décodage de protocole. Le dispositif 220 n'est pas certifié, il fait partie du « monde ouvert » (ne requiert qu'une « approbation opérationnelle »). Matériellement, le dispositif amovible peut être de différente nature (circuit propriétaire, ordinateur du commerce e.g. portable, téléphone portable, tablette, etc). Le dispositif peut comprendre (ou non) des moyens d'affichage ou IHM (e.g. écrans, projecteur, picots, haut-parleur, interface de saisie, commande vocale ou gestuelle, etc). Le dispositif amovible peut optionnellement accéder à des ressources de calcul « élastique » (calcul dans les nuages) et peut notamment interagir avec des équipements au sol, pour différents services. Par exemple, il peut communiquer (modes push et/ou pull) des données de vol aux équipements localisés au sol. Par exemple, un routeur 4G peut transférer les données de vol de manière autonome et constituer un point d'accès sécurisé pour les équipements sols autorisés. Dans un mode de réalisation, l'affichage graphique d'un code (par exemple un QR code) peut permettre la communication de mot de passe afin d'authentifier une ou plusieurs décisions et/ou aux fins de signature. Dans un mode de réalisation, le composant logiciel peut streamer ou communiquer en continu des données (par exemple de vol) à des dispositifs au sol, de manière à permettre des affichages « en direct » (live broadcast).

Le dispositif amovible peut être perçu comme le « cerveau » ou l'entité de gestion qui se « greffe » à l'avionique, sans la perturber ni risquer de la corrompre. De manière générale, le dispositif amovible est évolutif. Sa certification est dite « ops approved » (approbation opérationnelle, i.e. du fait de la compagnie aérienne, les fournisseurs de composants devant apporter des éléments de démonstration en vue de cette certification spécifique).

Dans un développement, le dispositif 220 est électriquement isolé des dispositifs de type avionique au travers du dispositif 210. Par exemple, le dispositif de type avionique 210 comprend un optocoupleur. Ce type d'isolation évite ou empêche notamment toute surtension dans les circuits avioniques certifiés.

Selon l'invention, le dispositif amovible 220 de type non avionique comprend en outre un circuit de communication sans-fil 222, par exemple cellulaire (2G, 3G, 4G, 5G, etc) et/ou Wifi/Bluetooth ou autres. Une liaison cellulaire permet des communications vers le sol. Une communication par Wifi permet notamment des échanges avec des tablettes EFB.

Selon l'invention, le dispositif de type avionique 210 est configuré pour déterminer l'état en vol ou au sol de l'aéronef, et en réponse à cet état déterminé, à arrêter ou suspendre ou couper toute communication sans fil, notamment de type cellulaire. Avantageusement, cette approche empêche toute perturbation électromagnétique. Les états peuvent être nuancés (e.g. roulage, décollage, train d'atterrissage activé, déployé, en cours, etc) et les conséquences également modulées.

Dans un développement, le système selon l'invention comprend en outre un dispositif 230 situé au sol permettant les échanges de données et l'administration opérationnelle du dispositif 220.

Dans un développement, le support d'accueil est associé à un ou plusieurs mécanismes d'association physique temporaire, de nature mécanique et/ou électrique et/ou magnétique et/ou chimique.

Il est décrit un procédé pour la gestion du vol d'un aéronef comprenant les étapes consistant à : - connecter un dispositif amovible 220 de type non-avionique à un support d'accueil 2101 installé dans l'aéronef et de type avionique, ledit support d'accueil étant initialement dans une configuration d'isolation électrique avec les dispositifs de type avionique 200 ; - après connexion du dispositif amovible 220 au support d'accueil, connecter électriquement ledit support d'accueil à une alimentation électrique faisant partie des dispositifs de type avionique 200 ; et
- recevoir unilatéralement des données avioniques dans le dispositif amovible 220 depuis les dispositifs de type avionique 200.

Selon l'invention, le procédé comprend en outre les étapes consistant à : déterminer le statut en vol ou au sol d'un aéronef, ou selon différents états intermédiaires ; - le cas échéant, en fonction du statut déterminé, arrêter toute communication sans-fil du dispositif amovible 220.

Il est décrit un produit programme d'ordinateur, ledit programme d'ordinateur comprenant des instructions de code permettant d'effectuer une ou plusieurs des étapes du procédé, lorsque ledit programme est exécuté sur un ordinateur.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, ou électromagnétique.

## Revendications

1. Système pour la gestion du vol d'un aéronef comprenant :
- un dispositif de type avionique (210) installé dans l'aéronef, ledit dispositif installé étant :
- connectable à une source d'énergie électrique (201) de type avionique;
- connectable à un bus de données avionique (202) unidirectionnel ;
- connectable à un système de connectivité en vol (299) ;
- comprenant un support d'accueil (2101) ;
- un dispositif amovible (220) de type non avionique pouvant être fixé sur le support d'accueil (2101), ledit dispositif amovible (220) comprenant des ressources de calcul et de stockage (221) pour le traitement de données avionique transmises par le dispositif de type avionique, et configuré pour diffuser des paramètres associés aux données avioniques, à un ou plusieurs équipements de pilotes de type sacs de vol électronique ;
le dispositif amovible (220) de type non-avionique comprenant un circuit de communication sans-fil (222), par exemple cellulaire ; et
le dispositif de type avionique (210) étant configuré pour déterminer un état de l'aéronef parmi au moins un état en vol et un état au sol, et le cas échéant, en réponse à cet état, arrêter tout ou partie des communications sans fil du dispositif amovible, notamment de type cellulaire.

2. Système selon la revendication 1, le dispositif amovible (220) étant électriquement isolé des systèmes avioniques de l'aéronef au travers du dispositif de type avionique (210).

3. Système selon l'une quelconque des revendications précédentes, comprenant en outre un dispositif (230) situé au sol permettant les échanges de données et l'administration opérationnelle du dispositif amovible (220) et/ou de mise à jour à distance du dispositif amovible (220).

4. Système selon la revendication 1, dans lequel le support d'accueil est associé à un ou plusieurs mécanismes d'association physique temporaire, de nature mécanique et/ou électrique et/ou magnétique et/ou chimique.

5. Système selon la revendication 1, dans lequel le dispositif amovible (220) peut en outre traiter des données de type non-avionique.

6. Système selon la revendication 1, le dispositif amovible et la station d'accueil étant couplés à ou par un mécanisme de verrouillage et/ou de déverrouillage pouvant comprendre un système antivol.

7. Procédé pour la gestion du vol d'un aéronef dans un système selon l'une des revendications 1 à 6 comprenant les étapes consistant à :
- connecter le dispositif amovible (220) de type non-avionique au support d'accueil (2101) du dispositif de type avionique (210) installé dans l'aéronef
- après connexion du dispositif amovible (220) au support d'accueil, connecter électriquement ledit support d'accueil à une alimentation électrique faisant partie des systèmes avioniques de l'aéronef (200) ; et
- recevoir de manière unidirectionnelle des données avioniques dans le dispositif amovible (220) depuis les systèmes avioniques de l'aéronef (200) à travers le bus de données avionique (202), et diffuser des paramètres associés aux données avioniques à un ou plusieurs équipements de pilotes de type sac de vol électronique ;
- déterminer un état de l'aéronef parmi au moins un état en vol et un état au sol ;
- le cas échéant, en fonction de l'état déterminé, arrêter tout ou partie des communications sans-fil du dispositif amovible (220).

## Patentansprüche

1. System zum Management des Flugs eines Luftfahrzeugs, Folgendes umfassend:
- eine Vorrichtung vom Typ Avionik (210), die in dem Luftfahrzeug eingebaut ist, wobei die eingebaute Vorrichtung:
- sich mit einer elektrischen Energiequelle (201) vom Typ Avionik verbinden lässt;
- sich mit einem unidirektionalen Avionik-Datenbus (202) verbinden lässt;
- sich mit einem Konnektivitätssystem (299) während des Fluges verbinden lässt;
- eine Aufnahmehalterung (2101) umfasst;
- eine abnehmbare Vorrichtung (220) vom Typ Nicht-Avionik, die an der Aufnahmehalterung (2101) befestigt werden kann, wobei die abnehmbare Vorrichtung (220) Rechen- und Speicherressourcen (221) zur Verarbeitung von Avionikdaten umfasst, die von der Vorrichtung vom Typ Avionik übertragen werden, und konfiguriert ist, um Parameter, die den Avionikdaten zugeordnet sind, an eine oder mehrere Pilotenausrüstungen vom Typ elektronische Flugtasche zu übertragen;
wobei die abnehmbare Vorrichtung (220) vom Typ Nicht-Avionik eine drahtlose Kommunikationsschaltung (222), z. B. Mobilfunk, umfasst; und
wobei die Vorrichtung vom Typ Avionik (210) so konfiguriert ist, dass sie einen Zustand des Luftfahrzeugs unter mindestens einem Flugzustand und einem Bodenzustand ermittelt und gegebenenfalls als Reaktion auf diesen Zustand die gesamte oder einen Teil der drahtlosen Kommunikationen der abnehmbaren Vorrichtung, insbesondere vom Typ Mobilfunk, abbricht.

2. System nach Anspruch 1, wobei die abnehmbare Vorrichtung (220) über die Vorrichtung vom Typ Avionik (210) elektrisch gegenüber den Avioniksystemen des Luftfahrzeugs isoliert ist.

3. System nach einem der vorhergehenden Ansprüche, ferner umfassend eine am Boden befindliche Vorrichtung (230), die den Datenaustausch und die operative Verwaltung der abnehmbaren Vorrichtung (220) und/oder die Fernaktualisierung der abnehmbaren Vorrichtung (220) ermöglicht.

4. System nach Anspruch 1, wobei die Aufnahmehalterung einem oder mehreren temporären physikalischen Zuordnungsmechanismen mechanischer und/oder elektrischer und/oder magnetischer und/oder chemischer Art zugeordnet ist.

5. System nach Anspruch 1, wobei die abnehmbare Vorrichtung (220) ferner Daten vom Typ Nicht-Avionik verarbeiten kann.

6. System nach Anspruch 1, wobei die abnehmbare Vorrichtung und die Aufnahmestation mit oder durch einen Ver- und/oder Entriegelungsmechanismus gekoppelt sind, der ein Anti-Diebstahl-System umfassen kann.

7. Verfahren zum Management des Flugs eines Luftfahrzeugs in einem System nach einem der Ansprüche 1 bis 6, folgende Schritte umfassend:
- Verbinden der abnehmbaren Vorrichtung (220) vom Typ Nicht-Avionik mit der Aufnahmehalterung (2101) der Vorrichtung vom Typ Avionik (210), die in dem Luftfahrzeug installiert ist;
- nach dem Verbinden der abnehmbaren Vorrichtung (220) mit der Aufnahmehalterung, elektrisches Verbinden der Aufnahmehalterung mit einer Stromversorgung, die einen Bestandteil der Avioniksysteme des Luftfahrzeugs (200) bildet; und
- unidirektionales Empfangen von Avionikdaten in der abnehmbaren Vorrichtung (220) von den Avioniksystemen des Luftfahrzeugs (200) über den Avionik-Datenbus (202), und Übertragen von Parametern, die den Avionikdaten zugeordnet sind, an eine oder mehrere Pilotenausrüstungen vom Typ elektronische Flugtasche;
- Bestimmen eines Zustands des Luftfahrzeugs unter mindestens einem Flugzustand und einem Bodenzustand;
- gegebenenfalls, in Abhängigkeit von dem ermittelten Zustand, Abbrechen der gesamten oder eines Teils der drahtlosen Kommunikationen der abnehmbaren Vorrichtung (220).

## Claims

1. A system for managing the flight of an aircraft comprising:
- a device of avionics type (210) installed in the aircraft, said installed device being:
- connectable to an electrical power source (201) of avionics type,
- connectable to a unidirectional avionics data bus (202);
- connectable to an in-flight connectivity system (299);
- comprising a docking support (2101);
- a removable device (220) of non-avionics type being able to be fixed onto the docking support (2101), said removable device (220) comprising computation and storage resources (221) for processing avionics data that are transmitted by the avionics type device, and configured to broadcast parameters associated with the avionics data to one or more piloting equipment items of electronic flight bags type;
the removable device (220) of non-avionics type comprising a wireless communication circuit (222), for example a cellular circuit; and
the device of avionics type (210) being configured to determine a state of the aircraft among at least an in-flight state and an on-the-ground state, and, if necessary, in response to this status, to stop all wireless communications of the removable device or part thereof, in particular of cellular type.

2. The system according to claim 1, the removable device (220) being electrically isolated from the avionics systems of the aircraft through the device of avionics type (210).

3. The system according to any one of the preceding claims, further comprising a device (230) situated on the ground allowing exchanges of data and the operational administration of the removable device (220) and/or remote updating of the removable device (220).

4. The system according to claim 1, wherein the docking support is associated with one or more temporary physical association mechanisms, of mechanical and/or electrical and/or magnetic and/or chemical nature.

5. The system according to claim 1, wherein the removable device (220) can further process data of non-avionics type.

6. The system according to claim 1, the removable device and the docking station being coupled to or by a locking and/or unlocking mechanism that can comprise an anti-theft system.

7. A method for managing the flight of an aircraft in a system according to one of claims 1 to 6 comprising the steps of:
- connecting the removable device (220) of non-avionics type to the docking support (2101) of the device of avionics type (210) installed in the aircraft;
- after connection of the removable device (220) to the docking support, electrically connecting said docking support to an electrical power supply forming part of the avionics systems of the aircraft (200); and
- unilaterally receiving avionics data in the removable device (220) from the avionics systems of the aircraft (200) through the bus of avionics data (202) and broadcasting parameters associated with the avionics data to one or more piloting equipment items of electronic flight bags type;
- determining a state of the aircraft among at least an in-flight state and an on-the-ground state;
- if necessary, depending on the determined state, stopping all wireless communications of the removable device (220) or part thereof.
